(19) Europäisches Patentamt
European Patent Office
Office européen des brevets

(11) Publication number: **0 119 731 B1**

(12) # EUROPEAN PATENT SPECIFICATION

(45) Date of publication of patent specification: **26.07.89**

(51) Int. Cl.[4]: **C 08 G 63/18,** C 08 G 63/34, C 08 G 75/23

(21) Application number: **84300925.9**

(22) Date of filing: **14.02.84**

(54) **Copolyester of polyethylene terephthalate, process for making it and its use in producing molded articles.**

(30) Priority: **14.02.83 US 466246**

(43) Date of publication of application: **26.09.84 Bulletin 84/39**

(45) Publication of the grant of the patent: **26.07.89 Bulletin 89/30**

(84) Designated Contracting States: **BE CH DE FR GB IT LI LU NL SE**

(56) References cited:
**GB-A-2 010 295**
**GB-A-2 096 156**
**US-A-4 066 624**
**US-A-4 356 299**

(73) Proprietor: **ROHM AND HAAS COMPANY**
**Independence Mall West**
**Philadelphia Pennsylvania 19105 (US)**

(72) Inventor: **Cholod, Michael Stefan**
**6409 Todd Court**
**Cornwells Heights Pa. 19020 (US)**

(74) Representative: **Angell, David Whilton et al**
**ROHM AND HAAS (UK) LTD. European Operations Patent Department Lennig House**
**2 Mason's Avenue**
**Croydon CR9 3NB (GB)**

**EP 0 119 731 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention concerns copolyester of polyethylene terephthalate, process for making it and its use in producing molded articles. The copolyester is useful in forming films and clear molded articles. More particularly, this invention concerns a copolyester of polyethylene terephthalate and bis (4-beta hydroxy ethoxy phenyl) sulfone (hereafter referred to as BSE) having an increased crystallization time which provides the user of such copolyesters with more processing time to manufacture thicker films or molded articles, thereby avoiding premature crystallization and its attendant disadvantages.

Polyethylene terephthalate polymers can be either crystalline or non-crystalline solids. Crystalline polyethylene terephthalate (PET) is white and opaque, while the non-crystalline form is generally clear or transparent. When manufacturing a film the melted PET polymer may be extruded onto a casting roll, and if a molded article is to be manufactured, the PET polymer may be injected into a mold. Regardless of whether a film or molded article is being manufactured, the manufacturer desires to obtain the finished article substantially composed of transparent or clear PET to avoid the commercial disadvantage associated with a white, opaque film or article. It is known that when PET is heated to a semi-molten state, above its crystalline melting point, PET is amorphous. Unless the polymer is quickly cooled, the film or molded article will tend to crystallize and the resulting product will have a color or opacity which is commercially unacceptable. It is well known that, when processing PET, there is only a limited amount of time, generally only about one minute, to solidify the film or molded article in the amorphous state before significant crystallization sets in.

PET polymers are conventionally produced in two steps. In the first step a prepolymer is formed. This is accomplished commercially in either of two ways. The prepolymer may be formed by the ester interchange reaction of ethylene glycol and dimethyl terephthalate or by the direct esterification reaction of ethylene glycol and terephthalic acid. Once the prepolymer is formed it is converted, in a second step, by a polycondensation reaction to a higher molecular weight polymer.

Since PET homopolymers crystallize too rapidly for molding into clear articles and result in opaque or colored products, copolymers of PET have been proposed. These copolymers have been formed using certain glycols instead of, or in addition to, ethylene glycol, or by using certain co-acids or their corresponding esters, in the prepolymer formation step. It has been found, however, that most of the common co-glycols and co-acids impart a lower glass transition temperature to the resulting polymer and reduce the resistance of the polymer to heat-induced embrittlement.

Attempts have been made to produce slow crystallizing PET copolymer by incorporating 5—20% of a co-glycol or co-acid. It has been found that, in order to increase the crystallization time enough to obtain a clear 0.2 inch thick molded part, a level of co-glycol or co-acid must be used which causes the resulting PET copolymer to embrittle when held for short periods of time at temperatures below their glass transition temperature. If the level of the conventional co-acid or co-glycol is reduced to the point where heat-induced embrittlement does not occur, then 0.2 inch thick parts molded from the resins will be very hazy or white (opaque) due to rapid crystallization.

Others in the field have unsuccessfully attempted to overcome the problems of rapid crystallization time, thermal stability, and color by various modifications to the prepolymer formation step, the polycondensation reaction step, and the catalysts utilized in the process.

Fiber forming terephthalate copolyesters having better water absorption and dyeability and a slight decreased tendency toward crystallization are disclosed in U.S. Patent No. 2,973,339 to Muenster et al. This patent discloses the use of certain co-glycols containing up to 30 mole percent, and preferably 5 to 20 mole percent, of a glycol containing one or two benzene nucleii, for example, para-para'-di-(beta-hydroxy ethoxy) diphenyl sulfone (BSE) in the presence of conventional esterification catalysts such as zinc borate, zinc benzoate, zinc oxide, magnesium stearate, barium oxide or lead oxide in the prepolymer formation step. This patent does not, however, teach or suggest a method for producing clear molded articles having improved crystallization time as compared to terephthalate homopolymers, or that parts molded from such a copolyester would be expected to have an improved resistance to heat-induced embrittlement.

U.S. Patent No. 4,066,624 to Kawase et al teaches that stability and transparency can be improved while retarding crystallization speed by the ester interchange reaction of a naphthalene dicarboxylic acid (component A), a diol containing an aromatic group and compound, such as a 4,4'-bis(omega-hydroxy alkoxy) diphenyl sulfone (BSE) (component B), and an aliphatic or alicyclic diol (component C). Component B contains at least 50 mole percent BSE or derivatives thereof. The proportion of component B may range from 5 to 95 mole percent of component A. The BSE was found to retard the crystallization of polyesters and to give polyesters good transparency and excellent thermal stability when combined with the other components. When BSE or its derivatives is used alone, without the aliphatic or alicyclic diol, the Kawase patent teaches that polyesters of sufficiently high degrees of polymerization cannot be prepared. The BSE (co-glycol) was found to retard crystallization of naphthalene polyesters, however; it was necessary to use the BSE co-glycol jointly with a diol to prepare a high molecular weight polyester.

U.S. Patent No. 4,188,357 to Go recognized that the glass transition temperature (Tg) of PET produced by direct esterification of terephthalic acid and ethylene glycol could be improved by adding a co-glycol, bis (4-beta-hydroxy ethoxy phenyl) sulfone (BSE) and a crosslinking agent, such as a trimellitic acid or its anhydride or lower alkyl ($C_1$—$C_4$) ester. The improvement in the melt strength or the resulting polymer was

the result of crosslinking. The BSE co-glycol helped to lower the melting point and raise the glass transition temperature of the polymer and allowed for lower extrusion and blowing temperatures without premature crystallization. This patent is silent, however, regarding the degree of any increase in crystallization time achieved using BSE (co-glycol) over that which would typically be expected by the addition of any co-glycol. The addition of BSE was directed primarily towards improving the glass transition temperature of the PET and the invention resides in the addition of the trimellitic crosslinking agent to form molded articles.

U.S. Patent No. 4,307,060, also to Go, discloses new copolyesters particularly useful as extrusion-blow molded (hollow) articles produced by the direct esterification reaction of terephthalic acid, ethylene glycol, bis (4- beta-hydroxy ethoxy phenyl) sulfone (BSE) co-glycol and a trifunctional crosslinking agent. The patent teaches using BSE at a concentration of from 2—25 mole percent on the amount of the terephthalic acid.

Other publications disclose the use of sulfonyl diphenol for preparing polyester fibers having higher shrinking and higher compatibility (Shima et al, Japanese Patents 71,38614 and 71,34929). These publications do not teach or suggest the addition of BSE to retard crystallization time. Ishigaki, Japanese Patent 73,71496, discloses the use of polyols and dihydroxy compounds to prepare heat and chemically resistant polyesters for coatings. The Ishigaki reference teaches the addition of sulfonyl diphenol after the polyethylene terephthalate is formed in a post reaction step to improve the utility of the polyester for coatings. The coatings, however, have a commercially unacceptable yellow color. Crystallization time is not typically important in coating applications. Accordingly, these publications do not teach or suggest increasing the crystallization time of polyethylene terephthalate copolyesters which are capable of being molded into clear articles by the addition of BSE.

Other attempts have been made to improve the process for producing PET polymers have good color properties. U.S. Patent No. 4,356,299, incorporated herein by reference, discusses the prior art attempts at providing improved polycondensation catalyst systems and discloses and claims an improved catalyst system which reduces the polycondensation reaction time. This catalyst comprises from about 2 to about 18 parts per million, based on the polymer product, of a catalyst metal in the form of an alkyl titanate and from about 40 to about 300 parts per million of catalyst metal in the form of an antimony compound.

Thus, the art has recognized the problems of producing polyethylene terephthalate polymers or copolymers having the desired properties of increased crystallization time and clarity.

It is an object of this invention, therefore, to provide a copolyester of polyethylene terephthalate and BSE having an increased crystallization time.

Another object of this invention is to provide such a copolyester which is capable of being molded into clear articles and which has an impact strength and resistance to thermally induced embrittlement at least comparable to articles prepared from PET homopolymers.

It is a further object of this invention to provide a process for preparing such copolyesters.

According to this invention there is provided copolyester of polyethylene terephthalate comprising (i) ethylene terephthalate units and 3 to 5 mol %, based on the amount of (i), of units derived from (ii) one or more compounds of the formula (I)

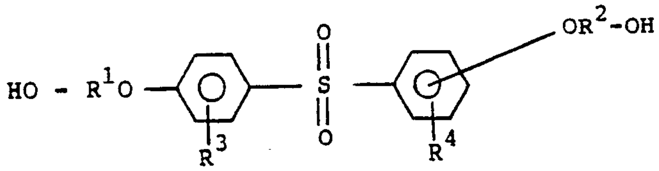

(I)

wherein $R^1$ and $R^2$ represent the same or different $C_2$ to $C_{10}$ alkyl group and $R^3$ and $R^4$ represent H or the same or different $C_2$ to $C_{10}$ alkyl group. Preferably (ii) comprises bis(4-beta hydroxy ethoxy phenyl) sulfone. The copolyester may comprise less than 5 mol % based on the amount of (i) of units derived from (ii) such as bis(4-beta hydroxy ethoxy phenyl) sulfone.

The copolyester of polyethylene terephthalate and BSE may be molded into clear articles having an increased crystallization time and an intrinsic viscosity, glass transition temperature, resistance to thermally induced embrittlement, and impact strength comparable to polyethylene terephthalate.

The invention also provides a process for preparing the copolyester comprising the steps of forming a polyethylene terephthalate prepolymer and polycondensing the prepolymer with 3 to 5 mole percent of (ii) such as BSE in the presence of a suitable amount of a polycondensation catalyst system, for example a system comprising an antimony and/or titanium compound.

There is furthermore provided a process for preparing a copolyester of polyethylene terephthalate comprising (1) preparing polyethylene terephthalate prepolymer by an ester interchange reaction between ethylene glycol, dimethyl terephthalate and 3 to 5 mol %, preferably less than 5 mol %, based on the molar amount of terephthalate, of bis(4-beta hydroxy ethoxy phenyl) sulfone; and (2) polycondensing the prepolymer in the presence of a metal-containing catalyst, said metal comprising one or more of: titanium, antimony, tin and germanium provided that when the catalyst system comprises antimony, the concentration of the antimony metal is 40 to 150 parts per million based on the weight of the copolyester as finally prepared.

The polyethylene terephthalate prepolymer may be formed by either an ester interchange reaction or by a direct esterification reaction.

If the prepolymer is to be prepared by the direct esterification of ethylene glycol and terephthalic acid, isophthalic acid, or other derivatives, the reaction may be conducted under a pressure of 1 to 2 atmospheres and at a temperature of from about 220°C to about 260°C. During the esterification reaction, water is distilled off. The reaction is considered complete when no further water is distilled off or the amount of water distilled off is about 90% to about 95% of the theoretical yield. The direct esterification reaction may be conducted without a catalyst; however, a catalyst is often used to increase the speed of the reaction, minimize the diethylene glycol content of the prepolymer, and improve the color of the prepolymer. Esterification catalysts such as zinc acetate, calcium acetate, titanium ethoxide, manganous acetate, antimony oxalate, may be used. The invention is not however, limited to any particular direct esterification catalyst or to any particular process conditions for the direct esterification reaction for forming a PET prepolymer.

If the prepolymer is prepared by an ester interchange reaction, the reacton may take place between ethylene glycol and dimethyl terephthalate. The reaction is preferably conducted under atmospheric pressure and at a temperature of from about 160°C to about 225°C. During the reaction, methyl alcohol is distilled off as a by-product. The ester interchange reaction is considered complete when, at the temperature of about 160°C to about 220°C, no further methanol is removed or the amount of methanol distilled off is about 90% to 95% of the theoretical yield.

The number of moles of ethylene glycol used in the prepolymer reaction for each mole of dimethyl terephthalate or terephthalic acid may range from 1.8 to 2.2 moles of ethylene glycol per mole of dimethyl terephthalate. Preferably, the molar ratio will be from about 2 to 1. If less than 1.8 moles of ethylene glycol is used for each mole of dimethyl terephthalate or terephthalic acid, then the reaction may not efficiently proceed to completion. If an amount in excess of 2.2 moles of ethylene glycol is used for each mole of dimethyl terephthalate or terephthalic acid, then the excess ethylene glycol may result in a faster reaction rate. However, the economic disadvantage of using excess ethylene glycol may offset the faster reaction rate.

The ester interchange reaction may require the use of a catalyst. The amount of catalyst may vary widely, but typically the catalyst can contain from 20 to 200 parts of metal per million parts of dimethyl terephthalate. Among the catalysts which may be used for the ester interchange reaction are magnesium acetate, lithium acetate, sodium methylate, magnesium acetate, cobalt acetate, calcium acetate, cobalt dichloride and manganese acetate tetrahydrate.

Following the formation of the prepolymer, the prepolymer may be further polymerized by a polycondensation reaction. This polycondensation reaction is preferably conducted at a temperature of from about 265°C to about 300°C and at a subatmospheric pressure of about 1 torr or less in the presence of a polycondensation catalyst.

It has been unexpectedly found that the addition of one or more compounds (II), especially bis (4-beta hydroxy ethoxy phenyl) sulfone (BSE) having the following chemical formula

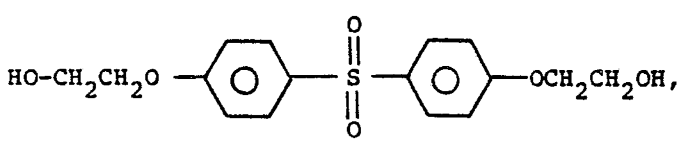

to the prepolymer during the polycondensation step, or preferably to the ester interchange reaction, may result in a copolyester having dramatically increased crystallization time, good thermal and mechanical properties, resistance to thermally induced embrittlement, and good color (clarity) without adversely affecting the polycondensation reaction time.

It has been found that the concentration of the units (ii) which are useful to increase crystallization time and improve resistance to heat-induced embrittlement ranges from 3 mole percent to 5 mole percent of the copolyester. At 5 mole percent, however, it has been found that the crystallization time, measured on the basis of the time it takes for half of the copolyester to crystallize, becomes greater than 1000 seconds. In addition, as the concentration of the units (ii) in the copolyester decreases to 3 mole percent, the time in which crystallization occurs becomes reduced. Accordingly, the preferred concentration of units (ii), preferably BSE in the copolyester is 3 mole percent to 5 mole percent for forming clear 0.2 inch-thick (5 mm) molded parts. More preferably less than 5 mole % of units (ii) such as BSE are present in the copolyester. This most preferred range of BSE concentration can result in a crystallization time of about seven to about ten minutes.

The BSE may be added at the start of the ester interchange reaction, during the direction esterification reaction, or to the prepolymer during the polycondensation reaction. In each case, the composition of the final copolyester can be the same.

The polycondensation reaction is preferably caried out in the prsence of a polycondensation catalyst system. This catalyst system is also preferably added after the prepolymer formation step is completed. If the polycondensation catalyst is added during the prepolymer formation step, then the desired rapid polycondensation reaction rate may not be obtained. Examples of useful polycondensation reaction

catalysts include compounds containing titanium, antimony, tin, and germanium.

Any titanic acid derivative may be used, such as alkyl titanates, for example, titanium tetraisobutoxide, tetraisopropyl titanate, tetra-n-butyl-titanate, tetramethyl titanate, acetyl triisopropyl titanate, and tetraisobutyl titanate. The preferred alkyl titanate is tetraisopropyl titanate.

The concentration of the alkyl titanate catalyst may be above 2 parts per million titanium, based on the weight of titanium metal to the weight of final copolyester product. Below 2 parts titanium per million parts of polymer product, the polycondensation reaction rate might be insufficient to yield a copolyester in a practical amount of time. When the concentration of the alkyl titanate catalyst is above 50 parts by weight titanium per million parts of polymer product, the color of the final copolyester may become unsatisfactory.

Amongst the antimony compounds which are useful in the catalyst system are antimony trioxide, antimony glucoxide, antimony butoxide and acetyl antimony dibutoxide. The preferred antimony compound is antimony trioxide, and the preferred concentration is 40 to 150 parts of antimony metal per million parts of polymer product.

A preferred catalyst system contains 100 parts antimony metal and 12 parts titanium metal. While it is possible to use the alkyl titanate separately, without the antimony compound, to catalyze the polycondensation reaction, the use of a catalyst containing both antimony and titanium metal can improve the rate of the polycondensation reaction. It is also possible to catalyze the polycondensation reaction with the antimony compound separately, without the alkyl titanate. However, the crystallization time of the final product may not be increased sufficiently and the final copolyester may have an unacceptable, greyish color. It is also possible to add the antimony compound during the prepolymer formation step; however, this is less preferable than its addition during the polycondensation reaction. The alkyl titanate catalyst, when used, should preferably be added after the prepolymer reaction is completed.

A chain branching agent may also be present during the polycondensation reaction. This is often desirable to increase the melt viscosity of the copolyester. The chain branching agent may be present at any stage during the preparation of the copolyester. If a chain branching agent is present, the concentration of the chain branching agent may be 0.1 to 2 mole percent based on the number of moles of dimethyl terephthalate terephthalic acid in the prepolymer formation step. Among the chain branching agents which may be used are pentaerythritol, dimethylol propionic acid and trimesic acid.

The polycondensation reaction is generally considered complete when the reaction product becomes sufficiently thick. This may be readily determined from the amount of power that is required to stir the reaction mixture.

Following the polycondensation reaction, the copolyester can have an intrinsic viscosity as measured in tetrachloroethane/phenol of the order 0.6 dl/g. This is typically too low an intrinsic viscosity for the manufacture of molded articles, thicker than about 3.2 mm (⅛"). Molded articles, thicker than about 3.2 mm (⅛"), require an intrinsic viscosity of the order 0.7 to 0.75 dl/g. PET homopolymer useful for molded articles typically has an intrinsic viscosity of 0.72 dl/g. In order to increase the intrinsic viscosity and molecular weight of the copolyester of this invention, it is preferable to further polymerize the copolyester. This is preferably performed in the solid phase by heating the copolyester to a temperature above the glass transition temperature of the copolyester but below its melting point. This solid phase polymerization may be conducted at a temperature of 200°C to 235°C while passing a stream of inert gas over the copolyester or while holding the copolyester under vacuum for a period of from about 8 to about 14 hours.

The resulting copolyester may have an intrinsic viscosity of at least 0.72 dl/g.

When preparing the copolyester, the starting materials may include other acid-derived comonomers beside dimethyl terephthalate and/or terephthalic acid so that the final product will have up to 2% of repeating units other than those derived from dimethyl terephthalate or terephthalic acid. Other acid-derived comonomers which may be present in an amount of up to 2% include isophthalic acid, bi-benzoic acid, naphthalene 1,4- or 2,6-dicarboxylic acid, adipic acid, sebacic acid and esters thereof.

It should be understood that, when the polyethylene terephthalate prepolymer is prepared by an ester interchange reaction, any other acid-derived comonomers which are included are all esters, and when the direct esterification route is used, all such other acid-derived comonomers are acids.

One may also include other glycols besides ethylene glycol in an amount such that the final product will have up to about 4% of repeating units other than those derived from ethylene glycol. Among such other glycols may be neopentyl glycol, propylene glycol, butylene glycol, diethylene glycol, propane 1,3-diol, butane-1,4-diol, polytetramethylene glycol and 1,4-hydroxy methyl cyclohexane.

The copolyster may also include various additives such as antioxidant stabilizers, ultraviolet light screening agents, extrusion acids, dyers or pigments, mold release agents, and the like. Other suitable additives will be apparant to one skilled in the art. Whichever additive or additives are used, they should be selected so as not to adversely affect the copolyester in its intended use.

For the purpose of illustrating the invention the following non-limiting examples are provided.

In these examples the following test procedures were used.

Intrinsic viscosities are determined in a 60/40 phenol/symmetrical tetrachlorethane at 30°C.

Crystallization time is determined using a Perkin-Elmer DSC—II differential scanning calorimeter using the following procedure. Approximately 10 milligrams of dried polyester is placed in the sample pan which is then placed in the calorimeter. The sample is heated to 300°C (573 K) and held at that temperature in order to melt the copolyester. After 120 seconds at this temperature, the sample is cooled at a rate of 160°C

per minute to a final temperature of 200°C (473 K). The exotherm is recorded and the crystallization time is taken as the time from the point that the recorder pen stablizes on the base line to the time of maximum crystallization exotherm.

Penetration impact tests were run on a Dynatup Model 8200 tester (Effects Technology, Inc.). Specimens were prepared by injection molding 51 mm × 76 mm × 3.2 mm (2″ × 3″ × $\frac{1}{8}$″) plaques. Heat-aged samples were held at 60°C for 5 days. The type of failure (brittle or ductile) was determined by visual observation and by measuring the impact strength of the test sample.

To a three-necked reaction vessel equipped with a stirrer, a condenser arranged for distillation, and a thermometer, is added 1000 parts of dimethyl terephthalate, 626 parts ethylene glycol, and BSE in the concentrations set forth in the following tables. Subsequently, 0.07 parts of manganese as manganese acetate (70 parts per million of final product), and 0.02 parts cobalt as cobalt acetate (20 parts per million of final product) are added to the reaction mixture. The reaction mixture is heated at a temperature of from 160°C to 225°C for a period of 97 minutes while removing 290 parts of methanol. Phosphorous acid (0.148 part) is then added as a stabilizer. The ester interchange prepolymer reaction is considered complete when 90 to 95% of the theoretical yield of methanol is removed or when no further methanol is removed. The polycondensation catalyst system is then added in the amounts set forth in the following table. The polycondensation catalyst system used is tetraisopropyl titanate and antimony trioxide. The pressure is reduced to less than 1 torr and the reaction temperature is increased to 280°C to 290°C to remove ethylene glycol by-product.

For comparison purposes, several examples are presented employing either alkyl titanate or an antimony compound separately as the polycondensation catalyst.

TABLE I

| Example | Polycond. Cat. (PC)[1] Type | Polycond. Cat. (PC)[1] Conc. | Copolymer[2] Type | Copolymer[2] Conc. | Crystall. Time (sec) DSC at 200°C | Clarity 0.2 molded article | Glass Trans. Temp. (Tg) DSC, °C | Intrin. Vis. (IV) dl/g | Penetration Impact Test As Molded | Penetration Impact Test After 5 days, 60°C |
|---|---|---|---|---|---|---|---|---|---|---|
| 1 | Sb/Ti | 100/10 | none | 0 | 60-80 | opaque | 82-84 | 0.72 | Ductile | Ductile |
| 2 | " | " | IPH[3] | 10 | 350-600 | clear | 75-80 | 0.62 | Ductile | Brittle |
| 3 | " | " | BSE | 3.0 | 630 | clear | 83-85 | 0.72 | Ductile | Ductile |
| 4 | " | " | NPG[4] | 10 | >500 | clear | 80-85 | 0.72 | Ductile | Brittle |

1 Conc. = Concentration (parts metal per million parts final product)

2 Conc. = Concentration (mole percent)

3 IPH = isophthalate - Added as dimethyl isophthalate during prepolymer step

4 NPG = Neopentylglycol added during prepolymer step

Table I presents the results of a comparative test of polyethylene terephthalate homopolymer (Example 1) and three copolyesters. Example 1 (homopolymer) results in an opaque 0.2 inch molded article which is ductile and resistant to heat-induced embrittlement. The crystallization time, however, was only 60—80 seconds at 200°C. Example 2 was prepared using 10 mole percent isophthalate, added during the prepolymer step as dimethyl isophthalate. Whle an 0.2 inch thick molded article prepared from this copolyester had an increased crystallization time and was clear, it exhibited a reduced glass transition temperature as compared with homopolymer and was brittle upon exposure to elevated temperature (60°C for 5 days). Example 3 presents a copolyester of the present invention prepared with 3.0 mole percent BSE added at the beginning of the ester interchange step. Molded articles produced therefrom were optically acceptable, ductile, and resistant to heat-induced embrittlement. The copolyester had a Tg comparable with the homopolymer (Example 1) and exhibited an increased crystallization time of 630 seconds. Copolyesters prepared with 3.0 mole percent or higher but less than 5.0 mole percent BSE isomers and mixtures thereof also have an increased crystallization time over PET homopolymer, and an intrinsic viscosity, Tg, impact strength and resistance to thermal-induced embrittlement at least equivalent to PET homopolymer. Example 4 was prepared by adding 10 mole percent of neopentylglycol to the prepolymer step. While this co-glycol increased the crystallization time and resulted in clear molded articles, the penetration impact test showed that heat-induced embrittlement had occurred.

TABLE II

| Example | Poly-condensation Catalyst (PC) Type | Conc.[1] | Poly-condensation Copolymer Type | mole % | Crystall Time (sec) at DSC[3] 200°C | Clarity 0.2" Thick Molded Article |
|---|---|---|---|---|---|---|
| 5 | Sb | 240 | none | 0 | 30 | opaque |
| 6 | Sb | 240 | BSE | 2.5 | 70 | opaque |
| 7 | Sb/Ti | 100/12 | none | 0 | 60-65 | opaque |
| 8 | Sb/Ti | 100/12 | BSE | 2.0 | 140 | sl. haze |
| 9 | Sb/Ti | 100/12 | BSE | 3.0 | 430 | clear |
| 10 | Sb/Ti | 100/12 | BSE | 5.0 | * | clear |
| 11 | Ti | 12 | none | 0 | 120 | opaque |
| 12 | Ti | 12 | IPH[2] | 2.0 | 150 | opaque |
| 13 | Ti | 12 | BSE | 3.0 | 430 | clear |

[1] Conc. = Concentration (parts metal per million parts final product)

[2] IPH = Isophthalate

[3] Crystallization time was determined at an IV of 0.62 dl/g.

* Greater than 1000 seconds.

Table II (Examples 5—13) presents a comparison of the copolyesters of this invention prepared with varying concentrations of catalysts and copolymers. Examples 5 and 6 show that, when antimony (240 ppm) catalyst alone is used, the crystallization time of a copolyester prepared using 2.5 mole % BSE results in only a slight increase in crystallization time but results in an opaque molded article. Examples 7—10 were prepared with the preferred combined Sb/Ti catalyst (100/12) system and with various concentrations of BSE. These examples show that, as the concentration of BSE increases, the crystallization time also increases. At 5.0 mole % BSE concentration, the crystallization time becomes too long to be measured (greater than 1000 seconds). Examples 11—13 present the results of copolyesters prepared using a titanium-containing catalyst only. The copolyester of Example 13 (3.0 mole % BSE) showed a crystallization time equal to that achieved in Example 9 using the same concentration of BSE with a combined Sb/Ti catalyst system.

## Claims

1. Copolyester of polyethylene terephthalate comprising (i) ethylene terephthalate units and 3 to 5 mol %, based on the amount of (i), of units derived from (ii) one or more compounds of the formula (I)

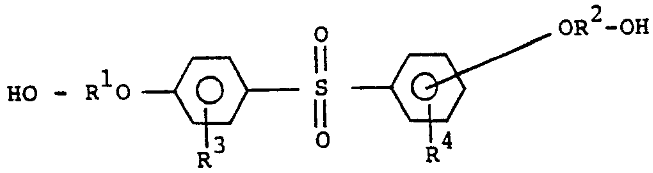

(I)

wherein $R^1$ and $R^2$ represent the same or different $C_2$ to $C_{10}$ alkyl group and $R^3$ and $R^4$ represent H or the same or different $C_2$ to $C_{10}$ alkyl group.

2. Copolyester as claimed in claim 1 further comprising up to 4 mol %, based on the amount of (i), (ii), (iii) and (iv) if any of (iii) glycol-derived units other than those derived from ethylene glycol and/or up to 2 mol % based on the amount of (i), (ii), (iii) if any and (iv) of (iv) acid-derived units other than (i).

3. Copolyester as claimed in either preceding claim wherein (ii) comprises bis(4-beta hydroxy ethoxy phenyl) sulfone.

4. Copolyester as claimed in claims 1, 2 or 3 comprising 3 to 5 mol % based on the amount of (i) of units derived from (ii).

5. Copolyester as claimed in any preceding claim prepared by forming a prepolymer of polyethylene terephthalate by an ester interchange reaction or a direct esterification reaction in the presence of said compound(s) (ii), and polycondensing the prepolymer in the presence of a catalyst system comprising an antimony and/or titanium compound.

6. Copolyester as claimed in claim 5 wherein the prepolymer is formed by an ester interchange reaction between ethylene glycol dimethyl terephthalate and bis(4-beta hydroxy ethoxy phenyl)sulfone.

7. A process for preparing a copolyester of polyethylene terephthalate comprising

(1) preparing polyethylene terephthalate prepolymer by an ester interchange reaction between ethylene glycol, dimethyl terephthalate and 3 to 5 mol %, based on the molar amount of terephthalate, of bis(4-beta hydroxy ethoxy phenyl) sulfone; and

(2) Polycondensing the prepolymer in the presence of a metal-containing catalyst, said metal comprising one or more of: titanium, antimony, tin and germanium provided that when the catalyst system comprises antimony, the concentration of the antimony metal is 40 to 150 parts per million based on the weight of the copolyester as finally prepared.

8. A process as claimed in claim 7 including the further step

(3) polymerising the polycondensed copolyester in the solid phase at a temperature above its glass transition temperature but below its melting point until the copolyester has an intrinsic viscosity of at least 0.72 dl/g.

9. A process as claimed in claim 7 or 8 wherein said catalyst comprises titanium in the form of one of the following alkyl titanates: titanium tetra-isobutiocide, tetra-isopropyltitanate, tri-isopropyl titanate and tetra-isobutyl titanate.

10. A process as claimed in claim 9 wherein the catalyst comprises 12 parts of titanium metal per million parts of the final copolyester.

11. A process as claimed in any one of claims 7 to 10 wherein the catalyst comprises 100 parts of antimony metal in the form of an antimony compound per million parts of the final copolyester.

12. A process as claimed in claim 7 including the further step of molding the polycondensed copolyester into a clear article.

13. A process as claimed in any one of claims 8 to 11 including the further step of molding the solid phase polymerised copolyester into a clear article having a thickness of at least 0.2 inches.

14. A clear molded article prepared from copolyester as claimed in any one of claims 1 to 6.

**Patentansprüche**

1. Copolyester von Polyethylenterephthalat aus (i) Ethylenterephthalateinheiten und 3 bis 5 Mol-%, bezogen auf die Menge von (i), an Einheiten, die auf (ii) 1 oder mehrere Verbindung(en) der Formel

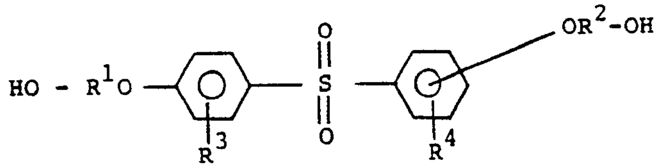

(I)

zurückgehen, worin $R^1$ und $R^2$ die gleiche oder verschiedene $C_2$—$C_{10}$-Alkylgruppe bedeuten und $R^3$ und $R^4$ H oder die gleiche oder verschiedene $C_2$—$C_{10}$-Alkylgruppe bedeuten.

2. Copolyester nach Anspruch 1, der weiter bis zu 4 Mol-%, bezogen auf die gegebenenfalls vorliegende Menge an (i), (ii), (iii) und (iv), (iii) auf Glykol zurückgehende Einheiten, die von Ethylenglykol verschieden sind, und/oder bis zu 2 Mol-%, bezogen auf eine gegebenenfalls vorliegende Menge an (i), (ii), (iii) und (iv), (iv) Säurederivateinheiten aufweist, die von den Derivaten gemäß (i) verschieden sind.

3. Copolyester nach einem der vorhergehenden Ansprüche, worin (ii) aus Bis(4-beta-hydroxyethoxyphenyl)sulfon besteht.

4. Copolyester nach den Anspruchen 1, 2 oder 3 aus 3 bis 5 Mol-%, bezogen auf die Menge an (i), Einheiten, die auf (ii) zurückgehen.

5. Copolyester nach einem der vorhergehenden Ansprüche, hergestellt durch Bilden eines Vorpolymeren aus Polyethylenterephthalat durch eine Esteraustauschreaktion oder eine direkte Veresterungsreaktion in Gegenwart der Verbindung(en) (ii) und Polykondensation des Vorpolymeren in Gegenwart eines Katalysatorsystems aus einer Antimon- und/oder Titanverbindung.

6. Copolyester nach Anspruch 5, wobei das Vorpolymere gebildet wird durch Esteraustauschreaktion zwischen dem Ethylenglykoldimethylterephthalat und Bis(4-beta-hydroxyethoxyphenyl)sulfon.

7. Verfahren zur Herstellung eines Copolyesters aus Polyethylenterephthalat durch (1) Herstellung eines Polyethylenterephthalatvorpolymeren durch eine Esteraustauschreaktion zwischen Ethylenglykol, Dimethylterephthalat und 3 bis 5 Mol-%, bezogen auf die molare Menge an Terephthalat, Bis (4-beta-hydroxyethoxyphenyl)sulfon, und (2) Polykondensation des Vorpolymeren in Gegenwart eines Metall enthaltenden Katalysators, wobei das Metall aus einem oder mehreren der folgenden Metalle besteht: Titan, Antimon, Zinn und Germanium, vorausgesetzt, daß dann, wenn das Katalysatorsystem Antimon aufweist, die Konzentration des Antimonmetalls 40 bis 150 Teile pro Million, bezogen auf das Gewicht des fertig hergestellten Copolyesters, beträgt.

8. Verfahren nach Anspruch 7, umfassend die weitere Stufe (3) Polymerisation des polykondensierten Copolyesters in fester Phase bei einer Temperatur oberhalb seiner Glasübergantstemperatur, jedoch unterhalb seines Schmelzpunktes, bis der Copolyester eine Intrinsikviskosität von wenigstens 0,72 dl/g besitzt.

9. Verfahren nach Anspruch 7 oder 8, wobei der Katalysator Titan in Form eines der folgenden Alkyltitanate enthält: Titantetrasibutoxid, Tetraisopropyltitanat, Triisopropyltitanat und Tetraisobutyltitanat.

10. Verfahren nach Anspruch 9, wobei der Katalysator 12 Teile Titanmetall pro Million Teile der fertigen Copolyesters aufweist.

11. Verfahren nach einem der Ansprüche 7 bis 10, wobei der Katalysator 100 Teile Antimonmetall in Form einer Antimonverbindung pro Million Teile des fertigen Copolyesters aufweist.

12. Verfahren nach Anspruch 7, umfassend die weitere Stufe der Verformung des polykondensierten Copolyesters zu einem klaren Gegenstand.

13. Verfahren nach einem der Ansprüche 8 bis 11, umfassend die weitere Stufe der Verformung des in der festen Phase polymerisierten Copolyesters zu einem klaren Gegenstand mit einer Dicke von wenigstens 0,2 inches.

14. Klarer geformter Gegenstand, hergestellt aus einem Copolyester gemäß einem der Ansprüche 1 bis 6.

**Revendications**

1. Copolyester de polyéthylène téréphtalate comprenant (i) ds motifs d'éthylène téréphtalate et 3 à 5% molaires, relativement à la quantité de (i), de motifs dérivés de (ii) un ou plusieurs composés de formule (I)

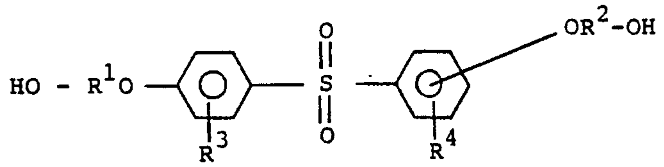

(I)

dans laquelle $R^1$ et $R^2$ représentent des groupes alcoyles en $C_2$ à $C_{10}$ semblables ou différents et $R^3$ et $R^4$ représenent H ou des groupes alcoyles en $C_2$ à $C_{10}$ semblables ou différents.

2. Copolyester selon la revendication 1 comprenant de plus jusqu'à 4% molaires, relativement à la quantité de (i), (ii), (iii) et (iv) éventuellement de (iii) des motifs dérivés de glycol autres que ceux dérivés de l'éthylèneglycol, et/ou jusqu'à 2% molaires relativement à la quantité de (i), (ii), (iii) éventuellement, et (iv) de (iv) des motifs dérivés d'un acide autre que (i).

3. Copolyester selon l'une ou l'autre des revendications précédentes, dans lequel (ii) comprend la bis(4-β-hydroxyéthoxyphényl)sulfone.

4. Copolyester selon les revendications 1, 2 ou 3 comprenant 3 à 5% molaires relativement à la quantité de (i) de motifs dérivés de (ii).

5. Copolyester selon l'une ou l'autre des revendications précédentes, préparé par formation d'un prépolymère de polyéthylène téréphtalate selon une réaction de transestérification ou une réaction d'estérification directe en présence du ou desdits composés (ii) et polycondensation du prépolymère en présence d'un système catalytique comprenant un composé d'antimoine et/ou de titane.

6. Copolyester selon la revendication 5, dans lequel le prépolymère est formé par une réaction de transestérification entre l'éthylèneglycol, le téréphtalate de diméthyle et la bis(4-β-hydroxyéthoxyphényl)-sulfone.

7. Un procédé pour préparer un copolyester de polyéthylène téréphtalate comprenant (1) la préparation d'un prépolymère de polyéthylène téréphtalate selon une réaction de transestérification entre l'éthylèneglycol, le téréphtalate de diméthyle et 3% à 5% molaires, relativement à la quantité molaire de téréphtalate, de bis(4-β-hydroxyéthoxyphényl)sulfone; et

(2) la polycondensation du prépolymère en présence d'un catalyseur contenant un métal, ledit métal comprenant un ou plusieurs du titane, de l'antimoine, de l'étain et du germanium, sous réserve que lorsque le système catalytique comprend de l'antimoine, la concentration de l'antimoine métallique soit de 40 à 150 parties par million, relativement au poids du copolyester finalement préparé.

8. Un procédé selon la revendication 7 comprenant de plus le stade de

(3) polymérisation du copolyester polycondensé en phase solide à une température supérieure à sa température de transition vitreuse, mais inférieure à son point de fusion, jusqu'à ce que le copolyester ait une viscosité intrinsèque d'au moins 0,72 dl/g.

9. Un procédé selon la revendication 7 ou 8, dans lequel ledit catalyseur comprend du titane sous forme d'un des titanates d'alcoyle suivants: tétra-isobutylate de titane, titanate de tétra-isopropyle, titanate de tri-isopropyle et titanate de tétra-isobutyle.

10. Un procédé selon la revendication 9, dans lequel le catalyseur comprend 12 parties de titane métallique par million de parties du copolyester final.

11. Un procédé selon l'une quelconque des revendications 7 à 10, dans lequel le catalyseur comprend 100 parties d'antimoine métallique sous forme d'un composé d'antimoine par million de parties du copolyester final.

12. Un procédé selon la revendication 7 comprenant de plus le stade de moulage du copolyester polycondensé en un article clair.

13. Un procédé selon l'une quelconque des revendications 8 à 11 comprenant de plus le stade de moulage du copolyester polyérisé en phase solide en un article clair ayant une épaisseur d'au moins 5 mm (0,2 inch).

14. Article moulé clair préparé à partir d'un copolyester selon l'une quelconque des revendications 1 à 6.